# EUROPÄISCHE PATENTANMELDUNG

(11) **EP 3 660 477 A1**
(43) Veröffentlichungstag der Anmeldung: **03.06.2020**
(21) Anmeldenummer: 19212151.5
(22) Anmeldetag: 28.11.2019
(51) Int. Cl.: G01L 5/13, B21K 1/76, F16D 3/40, G01L 3/14, G01L 5/12

(54) **ZAPFENKREUZ UND KREUZGELENK ENTHALTEND EIN SOLCHES**

(30) Priorität: 29.11.2018 DE 102018220609
(71) Anmelder: Off-Highway Powertrain Services Germany GmbH, 53797 Lohmar (DE)
(72) Erfinder: Kisla, Timur Mehmet, 53844 Troisdorf (DE); Krüger, Max, 53797 Lohmar (DE)
(74) Vertreter: Grünecker Patent- und Rechtsanwälte PartG mbB

(57) **Zusammenfassung**

Die vorliegende Erfindung liegt auf dem Gebiet der Antriebstechnik und schlägt eine raumsparende Möglichkeit zur Ermittlung von durch eine Gelenkwelle übertragenen Kräften bzw. Momenten mit einem Zapfenkreuz (8) eines Kreuzgelenks mit vier von einer Basis (14) abragenden Zapfen (6) vor, an dem dafür ein Dehnungssensor (16) befestigt ist.

## Beschreibung

Die vorliegende Erfindung liegt auf dem Gebiet der Antriebstechnik.

Bei der Übertragung eines Drehmoments in einem geknickten Wellenstrang kommen Gelenkwellen zum Einsatz. Mitunter sind diese Gelenkwellen mit einem zusätzlichen Längenausgleich versehen, welcher auch als Schiebestück bezeichnet wird.

Solche Gelenkwellen, die mit der vorliegenden Erfindung verbessert werden sollen, kommen auch zwischen Traktoren und davon gezogenen, geschobenen oder getragenen landwirtschaftlichen Arbeitsmaschinen zum Einsatz. Zwischen dem Traktor und der Arbeitsmaschine wird in der Regel eine Gelenkwelle mit zwei Kreuzgelenken und einer dazwischenliegenden, mehrteiligen Welle, die ein Wellenrohr sowie Segmente für den Längenausgleich verwirklicht, eingesetzt, um die Drehmoment-Übertragung davon unabhängig zu machen, welche Bewegung die Arbeitsmaschinen relativ zu dem Traktor bzw. der Zugmaschine ausführt. Der vorliegenden Erfindung geht es insbesondere um die Verbesserung solcher Gelenkwellen.

Es ist bekannt, zwischen den beiden Kreuzgelenken im Bereich der Welle das übertragene Drehmoment zu messen, vgl. DE 101 60 760 B4, DE 10 2013 212 052, WO 2008/138369. Dazu wird in der Regel ein Dehnungsmessstreifen (DMS) unmittelbar an dem Wellenrohr der Welle befestigt. Über die Dehnung des Wellenrohres wird auf das übertragene Drehmoment geschlossen. Die Auswertung dieser Messgröße kann mit unterschiedlicher Zielsetzung erfolgen. So kann über die Drehmomentmessung verhindert werden, dass die Komponenten im Antriebsstrang oder die abtriebsseitig daran angeschlossene Maschinen überlastet werden.

Eine hinreichend präzise und einfache Umrechnung der torsionsinduzierten Dehnung des DMS in einen Drehmomentwert bedingt eine Anordnung des DMS auf einem zylindrischen rotationssymmetrischen Vollkörper oder aber einem zylindrischen rotationssymmetrischen Hohlkörper. Um Störgrößen zu vermeiden, sollte die Lage des DMS hinreichend weit von einem Flansch entfernt sein, der zum Anschluss der Welle an deren Ende vorgesehen sein kann. Störend sind auch Innen- bzw. Außenverzahnungen im Bereich des DMS, die beispielsweise als Teil des Längenausgleichs ausgebildet sind. Mitunter dürfen die Gelenkwellen nur eine kurze axiale Erstreckung haben, was die angemessene Positionierung des DMS zur genauen Ermittlung der Wellentorsion und damit der Drehmoment-Messung weiter erschwert.

Um den vorerwähnten Problemen ganz oder teilweise abzuhelfen, schlägt die vorliegende Erfindung ein Zapfenkreuz eines Kreuzgelenks mit vier von einer Basis abragenden Zapfen vor, an dem zumindest ein Dehnungssensor befestigt ist. Solch ein Dehnungssensor kann durch ein die Dehnung messendes Sensorelement gebildet sein oder ein solches aufweisen.

Die vorliegende Erfindung lässt sich von der Überlegung leiten, dass die mechanische Beanspruchung einer Gelenkwelle nicht an einem Wellenkörper der Gelenkwelle, sondern vielmehr im Bereich des Zapfenkreuzes gemessen werden sollte. Bei angemessener Berücksichtigung der geometrischen Gegebenheiten und der Dehnung aufgrund einer Biegung im Bereich des Zapfenkreuzes können auch in dem Zapfenkreuz Messwerte generiert werden, mit denen sich die mechanische Beanspruchung der Gelenkwelle berechnen bzw. hinreichend genau abschätzen lässt.

Das Zapfenkreuz ist dabei dasjenige Bauteil eines Kreuzgelenkes, an dem bei einem klassischen Kreuzgelenk die zwei gabelförmigen Mitnehmer angreifen. Das Zapfenkreuz hat vier von der Basis abragende Zapfen zur schwenkbaren Lagerung der Mitnehmer und zur Übertragung des Drehmoments von der Antriebsseite auf die Abtriebsseite im Bereich des Kreuzgelenkes. Die Zapfen und die Basis sind üblicherweise als einheitlicher Körper ausgebildet. Das Zapfenkreuz ist üblicherweise aus Metall ausgebildet und ist ein Guss- und/oder Schmiedeteil. Die Zapfen sind regelmäßig zur Aufnahme von Lagern spanend bearbeitet. Das erfindungsgemäße Zapfenkreuz kann aber auch aus Kunststoff, beispielsweise als einheitliches Spritzgussteil ausgebildet sein. Die Umsetzung der Erfindung ist an keine besondere stoffliche Beschaffenheit des Zapfenkreuzes gebunden.

Gemäß einer bevorzugten Weiterbildung der vorliegenden Erfindung ist der Dehnungssensor an der Basis befestigt. Der Dehnungssensor ist bevorzugt auf die Oberfläche der Basis aufgebracht. Der Dehnungssensor ist bevorzugt stoffschlüssig mit der Basis verbunden.

Gemäß einer weiteren bevorzugten Weiterbildung der vorliegenden Erfindung weist der Dehnungssensor zumindest ein zwischen benachbarten Zapfen an der Basis befestigtes Sensorelement auf. Dieses Sensorelement befindet sich bevorzugt in einer Ebene, die auch die vier Zapfen enthält. Regelmäßig befindet sich das Sensorelement in einer Ebene, die die Mittellängsachsen der Zapfen enthält. So befindet sich das Sensorelement üblicherweise in axialer Erstreckungsrichtung auf mittlerer Höhe des Zapfenkreuzes. Bei Ausgestaltungen, bei denen die sich diametral gegenüberliegenden Zapfen jeweils auf einer Ebene, die dazwischen vorgesehenen Zapfen indes mit ihren Mittellängsachsen auf einer anderen Ebene liegen, wobei die Ebenen der Mittellängsachsen zu den beiden Zapfenpaaren jeweils parallel zueinander liegen, empfiehlt sich die Anordnung des Sensorelementes mittig zwischen den beiden zuvor erwähnten Ebenen.

Soweit vorliegend allgemein auf die axiale Erstreckung abgestellt wird, bezieht sich diese axiale Erstreckung auf die axiale Erstreckung der geradlinig verlaufenden Gelenkwelle. Diese Erstreckungsrichtung verläuft senkrecht zu der Ebene, die die Mittellängsachsen der Zapfen enthält und schneidet in der Regel den Mittelpunkt des regelmäßig punktsymmetrisch ausgebildeten Zapfenkreuzes.

Soweit die nachfolgende Beschreibung auf eine die Zapfen enthaltende Ebene abstellt, ist damit insbesondere die die Mittellängsachse der vier Zapfen enthaltende Ebene gemeint.

Gemäß der vorliegenden Erfindung weist der Dehnungssensor ein die Dehnung durch Biegung des Zapfens gegenüber der Basis messendes Sensorelement auf. Bei einer ersten Variante handelt es sich um die Biegung des Zapfens in einer die Zapfen enthaltenden Ebene. Diese Biegung des Zapfens variiert mit dem über die Gelenkwelle übertragenen Drehmoment. So eignet sich diese Ausbildung des Dehnungssensors insbesondere zur Erfassung des aktuell mit der Gelenkwelle übertragenen Drehmoments.

Bei einer anderen Variante handelt es sich bei der Biegung des Zapfens um die Biegung quer zu der die Zapfen enthaltenden Ebene. Eine solche Biegung erfährt der Zapfen durch eine axiale Belastung des Kreuzgelenks also der in axialer Richtung übertragenen Kraft. Eine Überwachung der axialen Belastung hilft, vorzeitiges Versagen des Zapfenkreuzes zu bestimmen.

Es versteht sich, dass das Zapfenkreuz sowohl einen Sensor zur Messung der Biegung des Zapfens gegenüber der Basis in einer die Zapfen enthaltenden Ebene wie auch einen Dehnungssensor zur Messung der Biegung des Zapfens quer dieser Ebene aufweisen kann. So können sowohl die axiale Belastung als auch das übertragene Drehmoment über das Zapfenkreuz erfasst werden. Die beiden die entsprechenden Biegungen messenden Sensorelemente können einem einzigen Zapfen zugeordnet sein, um dessen Biegung gegenüber der Basis zu messen. Pro Zapfen kann auch lediglich ein einziges Sensorelement vorgesehen sein, wobei zumindest einem der Zapfen ein die Dehnung durch Biegung in einer die Zapfen enthaltenden Ebene messendes Sensorelement zugeordnet sein und einem anderen Zapfen ein die Biegung des Zapfens quer zu der die Zapfen enthaltenden Ebene messendes Sensorelement zugeordnet sein kann. Das Zapfenkreuz der vorliegenden Erfindung kann zwischen jedem Zapfen je ein oder je zwei Sensorelemente, also in der Summe vier oder acht Sensorelemente aufweisen.

Nach einer bevorzugten Weiterbildung ist zu jedem Zapfen zumindest ein Sensorelement vorgesehen. Die Anordnung der jeweiligen Sensorelemente nach Art einer Wheatstone'schen Messbrücke bietet die Möglichkeit, Störgrößen zu eliminieren, sodass die Auswertung der von den Sensorelementen abgesetzten Messsignale unmittelbar als Maß für die mechanische Beanspruchung durch die Übertragung des Drehmomentes oder die Übertragung einer axial wirkenden Kraft gewertet werden kann. So werden Dehnung beispielsweise allein aufgrund von Temperaturschwankungen, denen das gesamte Zapfenkreuz ausgesetzt ist, durch die Wheatstone'schen Messbrücke direkt eliminiert.

Die vorliegende Erfindung wird nachstehend anhand von Ausführungsbeispiel in Verbindung mit der Zeichnung näher erläutert. In dieser zeigen:
- Figur 1:: eine perspektivische Seitenansicht eines ersten Ausführungsbeispiels eines Kreuzgelenks;
- Figur 2:: eine perspektivische Draufsicht eines zweiten Ausführungsbeispiels eines Kreuzgelenks und
- Figur 3:: eine perspektivische Seitenansicht eines Zapfenkreuzes, welches in den Kreuzgelenken nach den Figuren 1 oder 2 zum Einsatz kommen kann.

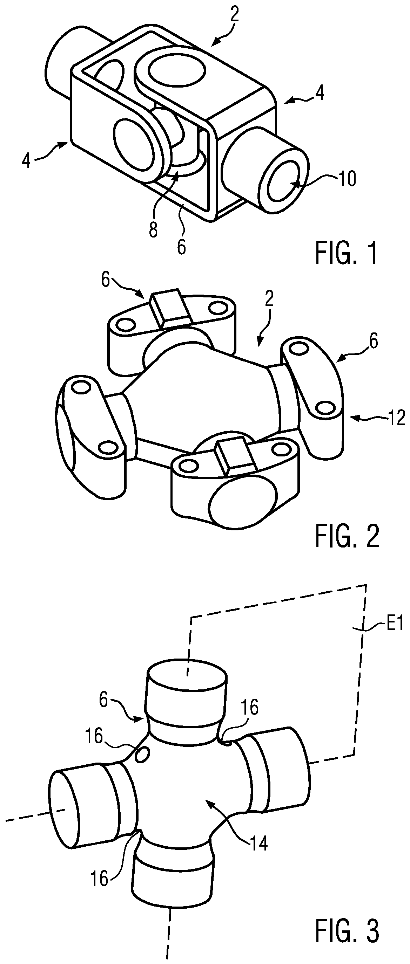

Die Figur 1 zeigt ein Beispiel eines Kreuzgelenkes 2 mit zwei gabelförmigen Mitnehmern 4, die jeweils an gegenüberliegenden Zapfen 6 eines Zapfenkreuzes 8 verschwenkbar gelagert sind. Die gabelförmigen Mitnehmer 4 weisen Aufnahmen 10 zur drehfesten Aufnahme eines nicht gezeigten Wellenkörpers auf.

Die Figur 2 zeigt ein alternatives Beispiel eines Kreuzgelenkes 2 mit einem Zapfenkreuz 8, dessen Zapfen 6 jeweils in Zapfenaufnahmen 12 aufgenommen sind, die über nicht gezeigte Befestigungsschrauben antriebs- bzw. abtriebsseitig befestigt werden können. Gegenüber dem Ausführungsbeispiel gemäß Figur 1 baut das in Figur 2 gezeigte Ausführungsbeispiel axial geringer auf. Beide Ausführungsbeispiele können indes die Erfindung verwirklichen, die nachstehend unter Bezugnahme auf Figur 3 erläutert wird.

Figur 3 zeigt ein Ausführungsbeispiel eines Zapfenkreuzes 8 mit vier Zapfen 6, die eine die Mittellängsachsen der Zapfen 6 enthaltende Ebene E1 definieren. Die Zapfen 6 ragen von einer mittleren Basis 14 ab und sind mit der Basis 14 in einem einheitlichen vorliegend geschmiedeten Bauteil verwirklicht. Die Oberfläche der Basis 14 ist im Wesentlichen unbearbeitet. Die Umfangsfläche der Zapfen 6 ist zur Aufnahme von Lager abgedreht.

An der Außenumfangsfläche der Basis 14 und zwischen zwei benachbarten Zapfen 6 ist in der Ebene E1 auf einer glatt gefrästen Oberfläche der Basis 14 ein Sensorelement 16 mit der Basis 14 verbunden. Dieses Sensorelement kann ein Dehnungsmessstreifen oder ein piezobasierter-Dehnungssensor sein.

Nach der vorliegenden Erfindung wird jedenfalls die mechanische Beanspruchung des Zapfenkreuzes 2 direkt an dem Zapfenkreuz 2 gemessen, um auf die über das Kreuzgelenk 2 bzw. die Gelenkwelle übertragene Drehmoment bzw. die von diesen Komponenten übertragene Axialkraft zu schließen. Das Sensorelement 16 ist dazu auf die Basis 14 aufgeklebt oder anderweitig stoffschlüssig mit dieser verbunden. Bei dem gezeigten Ausführungsbeispiel ist zwischen benachbarten Zapfen 6 zumindest je ein Sensorelement 16 vorgesehen.

Zur Ermittlung des übertragenen Drehmomentes wird die Biegung des Zapfens 6 in der die Zapfen 6 enthaltenden Ebene E1 relativ zu der Basis 8 erfasst. Der Grad der Biegung der Zapfen 6 in dieser Ebene E1 ist abhängig von der Höhe des über das Zapfenkreuz 8 übertragenen Drehmoments.

Alternativ oder ergänzend kann die Biegung des Zapfens 6 gegenüber der Basis 14 rechtwinklig zu der die Zapfen 6 enthaltenden Ebene E1 gemessen werden. Diese Biegung ist wiederum abhängig von der in axialer Richtung einer über das Zapfenkreuz 8 angeschlossenen Welle übertragenen Axialkraft. Die axiale Richtung entspricht der Rotationsachse des Zapfenkreuzes 8, die im Mittelpunkt des Zapfenkreuzes die Basis 14 rechtwinklig zu der Ebene E1 durchsetzt.

Mit der vorliegenden Erfindung wird eine einfache und kompakt bauende Möglichkeit angegeben, die mechanische Beanspruchung einer Gelenkwelle bzw. eines Kreuzgelenkes einer solchen Welle zu erfassen, indem ein Dehnungssensor an dem Zapfenkreuz selbst befestigt wird. So kann die mechanische Beanspruchung innerhalb des Kreuzgelenkes ermittelt werden. Die Gelenkwelle mag allein im Hinblick auf die gewünschte Anwendung ausgelegt werden. Eine Rücksichtnahme bei der Auslegung der Gelenkwelle auf etwaige Anforderungen zur Torsionsmessung an der Welle entfällt.

Die vorliegende Erfindung ist sich dem Umstand bewusst, dass mechanische Belastungen innerhalb des Zapfenkreuzes aufgrund des Kardanfehlers abhängig vom dem Drehwinkel variieren. Diese Varianz kann aber durch eine an den Dehnungssensor angeschlossene Logik zur Auswertung des Sensorsignals eliminiert werden.

Die Übertragung des Sensorsignals von dem Dehnungssensor erfolgt üblicherweise berührungsfrei. Der Dehnungssensor kann mit einer autonomen Energiequelle versehen sein, sodass eine Verkabelung zwischen der das Zapfenkreuz enthaltenden Gelenkwelle und einer Logik zur Auswertung des Sensorsignals und/oder Bestromung des Sensors gänzlich fehlen kann.

### Bezugszeichenliste

- 2: Kreuzgelenk
- 4: Gabelförmiger Mitnehmer
- 6: Zapfen
- 8: Zapfenkreuz
- 10: Aufnahme
- 12: Zapfenaufnahmen
- 14: Basis
- 16: Sensorelement
- E1: die Mittellängsachsen der Zapfen 6 enthaltende Ebene

## Patentansprüche

1. Zapfenkreuz (8) eines Kreuzgelenks mit vier von einer Basis (14) abragenden Zapfen (6), **gekennzeichnet durch** zumindest einen an dem Zapfenkreuz befestigten Dehnungssensor (16).

2. Zapfenkreuz (8) nach Anspruch 1, **dadurch gekennzeichnet, dass** der Dehnungssensor (16) an der Basis (14) befestigt ist.

3. Zapfenkreuz (8) nach Anspruch 1 oder 2, **dadurch gekennzeichnet, dass** der Dehnungssensor (16) zumindest ein zwischen benachbarten Zapfen (6) an der Basis (14) befestigtes Sensorelement (16) aufweist.

4. Zapfenkreuz (8) nach einem der vorherigen Ansprüche, **dadurch gekennzeichnet, dass** der Dehnungssensor ein die Dehnung durch Biegung des Zapfens (6) gegenüber der Basis (14) in einer die Zapfen (6) enthaltenden Ebene messendes Sensorelement (16) aufweist.

5. Zapfenkreuz (8) nach einem der vorherigen Ansprüche, **dadurch gekennzeichnet, dass** der Dehnungssensor ein die Dehnung durch Biegung des Zapfens (6) gegenüber der Basis (14) quer zu einer die Zapfen (6) enthaltenden Ebene messendes Sensorelement (16) aufweist.

6. Zapfenkreuz (8) nach einem der Ansprüche 3 bis 5, **dadurch gekennzeichnet, dass** zwischen jedem der Zapfen (6) zumindest ein Sensorelement (16) angeordnet ist.

7. Kreuzgelenk (2) mit zwei gabelförmigen Mitnehmern (4), die jeweils an gegenüberliegenden Zapfen (6) eines Zapfenkreuzes (8) nach einem der Ansprüche 1 bis 6 verschwenkbar gelagert sind.
